# EUROPÄISCHE PATENTANMELDUNG

(11) **EP 3 018 458 A1**
(43) Veröffentlichungstag der Anmeldung: **11.05.2016**
(21) Anmeldenummer: 15002995.7
(22) Anmeldetag: 20.10.2015
(51) Int. Cl.: G01J 1/02, G01J 1/04, G01J 1/26

(54) **SENSOR FÜR EINE VERDUNKELUNGSVORRICHTUNG**

(30) Priorität: 06.11.2014 DE 202014008766 U
(71) Anmelder: WIR elektronik GmbH & Co. KG, 48703 Stadtlohn (DE)
(72) Erfinder: RADEMACHER, Wilhelm, 46414 Rhede (DE)
(74) Vertreter: Von Rohr Patentanwälte Partnerschaft mbB

(57) **Zusammenfassung**

Gegenstand der Erfindung ist ein Sensor, insbesondere für ein Fenster (2) und insbesondere für eine dem Fenster (2) zugeordnete, motorisch arbeitende Verdunkelungsvorrichtung (3) wie einen Rollladen, eine Jalousie oder eine Markise, mit einem vorzugsweise gummielastisch ausgebildeten Saugfuß (5) zur mechanischen Befestigung am Fenster (2), wobei der Saugfuß (5) eine Saugseite (6) und eine der Saugseite (6) gegenüberliegende Rückseite (7) aufweist, wobei der Saugfuß (5) an der Rückseite (7) vorzugsweise mit mindestens einer Ausformung (8) versehen ist und wobei an der Saugseite (6) des Saugfußes (5) eine Lichteinspeisungsstelle (9) vorgesehen ist, an der Licht zur Rückseite (7) des Saugfußes (5) hin einspeisbar ist. Dieser Sensor zeichnet sich dadurch aus, dass am Saugfuß (5), vorzugsweise an der Rückseite (7) des Saugfußes (5), ein Datenfernübertragungsmodul (13) lösbar angebracht ist, das einen optoelektrischen oder optoelektronischen Wandler (14) mit einem optischen Eingang (15) und einem elektronischen Ausgang, eine Steuerelektronik zur Verarbeitung des Ausgangssignals des Wandlers (14), eine Übertragungseinrichtung (17) zur drahtlosen Übertragung des Ausgangssignals des Wandlers (14) an eine räumlich entfernt befindliche Empfangseinrichtung und einen elektrischen Energiespeicher (18) aufweist und dass das Datenfernübertragungsmodul (13) so am Saugfuß (5) angeordnet ist, dass der Wandler (14) mit seinem optischen Eingang (15) an der Lichteintrittsstelle (9) oder im Lichteintrittsbereich der Lichteintrittsstelle (9) angeordnet ist.

## Beschreibung

Die Erfindung betrifft einen Sensor, insbesondere für ein Fenster und insbesondere für eine dem Fenster zugeordnete, motorisch arbeitende Verdunkelungsvorrichtung wie einen Rollladen, eine Jalousie oder eine Markise. Insbesondere betrifft die Erfindung einen Sensor mit den Merkmalen des Oberbegriffs von Anspruch 1.

Ein Sensor der in Rede stehenden Art wird insbesondere als sog. Sonnensensor bzw. Helligkeitssensor im Bereich eines Fensters, einer Tür o. dgl. angebracht, so dass in Abhängigkeit von der Sonneneinstrahlung auf den Sensor bzw. in Abhängigkeit von der Außenhelligkeit das Fenster bzw. die Tür von einer zugeordneten Verdunkelungsvorrichtung passend verdunkelbar ist. Verdunkelungsvorrichtungen der in Rede stehenden Art sind Rollläden, Jalousien, Markisen oder andere Abschattungsanlagen, beispielsweise auch bewegliche Segel.

Der bekannte Sensor, von dem die Erfindung ausgeht (EP 0 339 241 B1), hat einen vorzugsweise gummielastisch ausgebildeten Saugfuß, mit dem der Sensor insgesamt mechanisch am Fenster oder an einer Tür befestigbar ist. Saugfüße dieser Art sind seit Jahrzehnten bekannt. Man kennt sie auch von Kleiderhaken etc. Es gibt Saugfüße, die nur aus dem vorzugsweise gummielastisch ausgebildeten Korpus bestehen und von Hand angedrückt werden. Es gibt aber auch Saugfüße, die einen vorzugsweise gummielastisch ausgebildeten Korpus haben, der dann mit einer Art Kniehebelmechanik gegen eine Verkleidung spannbar ist. Für die vorliegende Erfindung sind alle Arten von Saugfüßen einsetzbar.

Wesentlich ist, dass der Saugfuß eine Saugseite und eine der Saugseite gegenüberliegende Rückseite aufweist. An der Rückseite ist der Saugfuß ggf. mit mindestens einer Ausformung versehen.

Um die Funktion eines Sonnensensors bzw. Helligkeitssensors erfüllen zu können, hat der Sensor an der Saugseite des Saugfußes eine Lichteinspeisungsstelle. Von der Saugseite her einfallendes Sonnenlicht bzw. einfallendes diffus reflektiertes Licht ist an dieser Lichteinspeisungsstelle zur Rückseite des Saugfußes hin einspeisbar.

Bei dem bekannten Sensor, von dem die Erfindung ausgeht, erfolgt die Übertragung eines Sensorsignals an eine Auswerteelektronik mit Hilfe eines Lichtleiterkabels. Dazu hat der Saugfuß an der Rückseite, und zwar dort in der Ausformung, eine Einsteckaufnahme für ein Ende des Lichtleiters. Mittels des Lichtleiters bzw. des den Lichtleiter enthaltenden Kabels ist der Sensor mit Saugfuß mit einer an anderer Stelle angeordneten Empfangselektronik verbunden. Sämtliche elektrisch-aktiven Bauelemente der Empfangselektronik, einschließlich eines optoelektrischen oder optoelektronischen Wandlers, sind im vom Sensor entfernten Steuergerät zu finden. Durch Einsatz eines modernen Lichtleiters kann sich die Empfangselektronik in erheblichem Abstand von dem Sensor selbst befinden.

Bei diesem Stand der Technik wird also das an der Saugseite des Sensors einfallende Licht als solches, nämlich über den Lichtleiter, zur Empfangselektronik weitergeleitet.

Als Alternative zu dem zuvor erläuterten Sensor, der mit einem Lichtleiterkabel arbeitet, ist aus dem Stand der Technik auch ein Funksensor bekannt (DE 299 23 046 U1). Der dort beschriebene Sensor hat ein Gehäuse, an dessen einer Seite ein Saugfuß angeformt ist. Der Saugfuß dient zur Befestigung des Sensors an einer Fensterscheibe etc.. Bevorzugt ist der Saugfuß einstückig mit dem vollständig aus transparentem Material hergestellten Gehäuse oder einem Teil des Gehäuses des Sensors ausgebildet. Dieser Sensor hat keine Kabelverbindung, denn er arbeitet mit einer Übertragungseinrichtung zur drahtlosen Übertragung des Ausgangssignals eines optoelektrischen oder optoelektronischen Wandlers in dem Sensor. Insbesondere erfolgt die Datenübertragung per Funk. Sie kann aber auch mit einer Infrarot-Schnittstelle oder mit anderen drahtlosen Kommunikationsverfahren erfolgen.

Bei diesem Sensor befindet sich im Inneren des Gehäuses, an dem auch der vorzugsweise gummielastisch ausgebildete Saugfuß angebracht ist, neben dem optoelektrischen oder optoelektronischen Wandler eine Steuerelektronik zur Verarbeitung des Ausgangssignals des Wandlers, die bereits beschriebene Übertragungseinrichtung sowie ein elektrischer Energiespeicher, hier in Form eines wiederaufladbaren Akkus.

In der Praxis gibt es Anwendungsbereiche sowohl für den einen wie auch für den anderen zuvor beschriebenen Sensortyp. Der Erfindung liegt das Problem zugrunde, einen möglichst universell einsetzbaren Sensor zu finden.

Das zuvor aufgezeigte Problem ist bei einem Sensor mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Erfindungsgemäß ist die Elektronik, die für eine drahtlose und kabellose Fernübertragung der Signale des Sensors erforderlich ist, in einem Datenfernübertragungsmodul zusammengefasst. Dieses Datenfernübertragungsmodul ist an der Rückseite des Saugfußes lösbar angebracht. Der erfindungsgemäße Sensor hat also einen mechanischen Teil, den Saugfuß, ggf. noch mit zusätzlichen mechanischen Teilen, beispielsweise einer Abdeckkappe, und einen elektronischen Teil, das Datenfernübertragungsmodul in seinem körperlich vom Saugfuß getrennten Gehäuse. Das Datenfernübertragungsmodul ist am Saugfuß lösbar angebracht. Der Saugfuß kann also wahlweise ohne Datenfernübertragungsmodul verwendet werden oder mit Datenfernübertragungsmodul. Im ersten Fall entspricht die Funktionalität des Sensors bei entsprechender Ausgestaltung des Saugfußes dem an erster Stelle erläuterten Stand der Technik, im zweitgenannten Fall wird aus dem Sensor mittels des Datenfernübertragungsmoduls ein Funksensor.

Hat der Saugfuß an der Rückseite eine Einsteckaufnahme, so empfiehlt es sich, dass der Wandler mit seinem optischen Eingang in oder an der Einsteckfassung angeordnet ist.

Die Lichteinspeisungsstelle kann im einfachsten Fall eine einfache Lichtdurchtrittsstelle zwischen Saugseite und Rückseite des Saugfußes sein. In besonderer Ausgestaltung, die insbesondere mit dem Einsatz einer Einsteckaufnahme für ein Ende eines Lichtleiters korrespondiert, kann an der Lichteinspeisungsstelle ein vorzugsweise schräg stehender Spiegel und/oder eine Linse vorgesehen sein (siehe den eingangs erläuterten Stand der Technik).

Wenn sich im Saugfuß eine Einsteckaufnahme für ein Ende eines Lichtleiters befindet, so entspricht es einer besonders bevorzugten Ausführungsform der Erfindung, dass das Datenfernübertragungsmodul mechanisch in die Einsteckaufnahme eingesteckt und zumindest auch dadurch mechanisch am Saugfuß befestigt ist. Die Einsteckaufnahme wird also hier gleich für die mechanische Befestigung des Datenfernübertragungsmoduls am Saugfuß genutzt.

In einer anderen Variante kann man vorsehen, dass das Datenfernübertragungsmodul eine Vorderseite aufweist, deren Kontur an die Rückseite des Saugfußes angepasst ist und dass das Datenfernübertragungsmodul auf den Saugfuß aufgesteckt ist. Eine entsprechend konturierte Rückseite des Saugfußes kann dann entsprechend passgenau mit dem Datenfernübertragungsmodul zusammenwirken. Das ist eine besonders einfache und sehr zweckmäßige Konstruktion.

Hat der Saugfuß an der Rückseite eine Einsteckaufnahme, so empfiehlt es sich bei dieser Konzeption, dass der optische Eingang des Wandlers bei aufgestecktem Datenfernübertragungsmodul unmittelbar am offenen Ende der Einsteckaufnahme sitzt.

Gegenstand der Erfindung ist auch ein Datenfernübertragungsmodul, das entsprechend an einen Saugfuß eines erfindungsgemäßen Sensors angepasst ist.

Im Folgenden wird die Erfindung nun anhand einer lediglich Ausführungsbeispiele darstellenden Zeichnung näher erläutert. In der Zeichnung zeigt
- Fig. 1: in einer schematischen Ansicht beispielhaft ein Fenster mit einer zugeordneten, motorisch arbeitenden Verdunkelungsvorrichtung und einem an der Fensterscheibe des Fensters angebrachten Helligkeitssensor,
- Fig. 2: ein Beispiel eines Sensors gemäß des den Ausgangspunkt bildenden Standes der Technik,
- Fig. 3: ein erstes Ausführungsbeispiel eines erfindungsgemäßen Sensors,
- Fig. 4: ein zweites Ausführungsbeispiel eines erfindungsgemäßen Sensors,
- Fig. 5: im Schnitt, schematisiert, den Sensor aus Fig. 4.

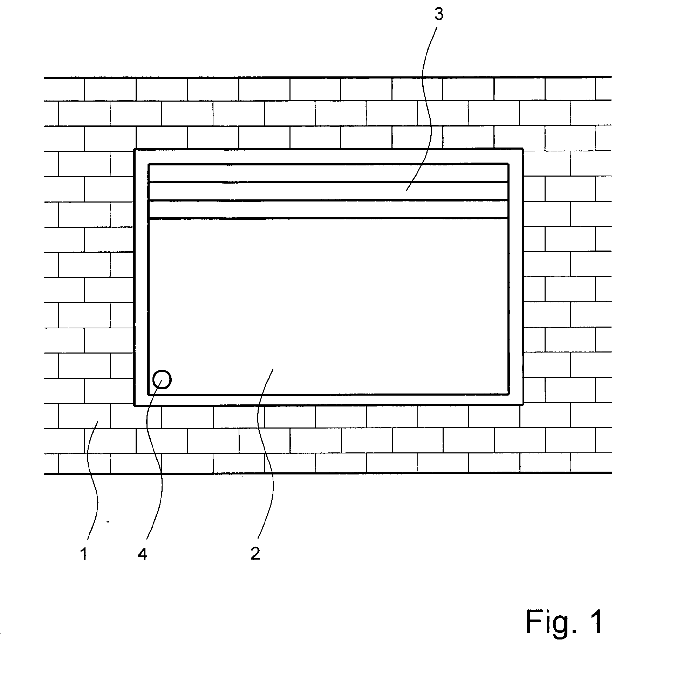

Fig. 1 zeigt in einer Ansicht ein in einer Wand 1 eines Gebäudes befindliches Fenster 2, das durch eine zugeordnete, motorisch arbeitende Verdunkelungsvorrichtung 3, hier in Form eines Rollladens, abgeschattet werden kann. Alternativen für Verdunkelungsvorrichtungen sind Jalousien, Markisen, verstellbare Segel etc..

Am Fenster 2 befindet sich links unten angedeutet ein Sensor 4, mit dem die Sonneneinstrahlung bzw. die Helligkeit der Umgebung erfassbar ist, also ein Sonnensensor bzw. Helligkeitssensor (siehe den eingangs erläuterten Stand der Technik).

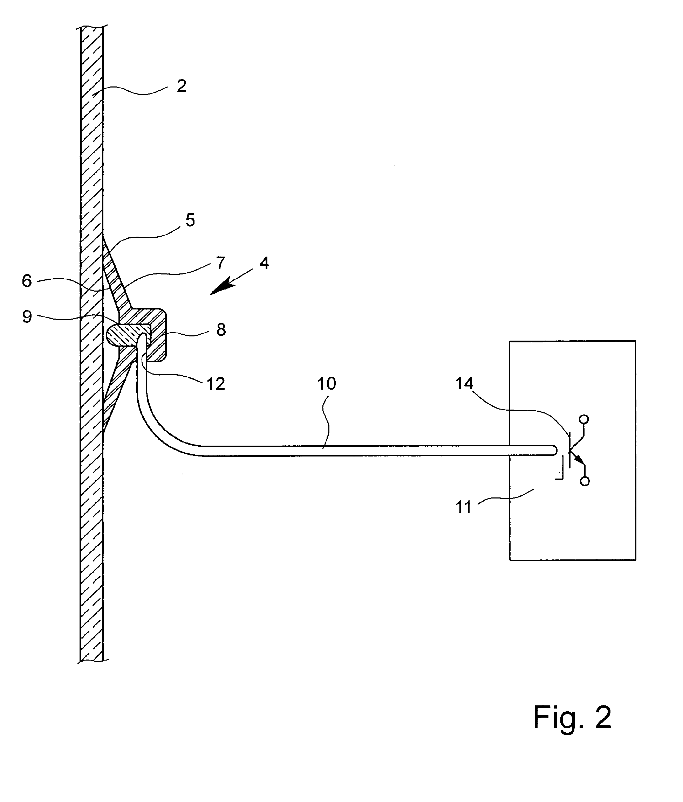

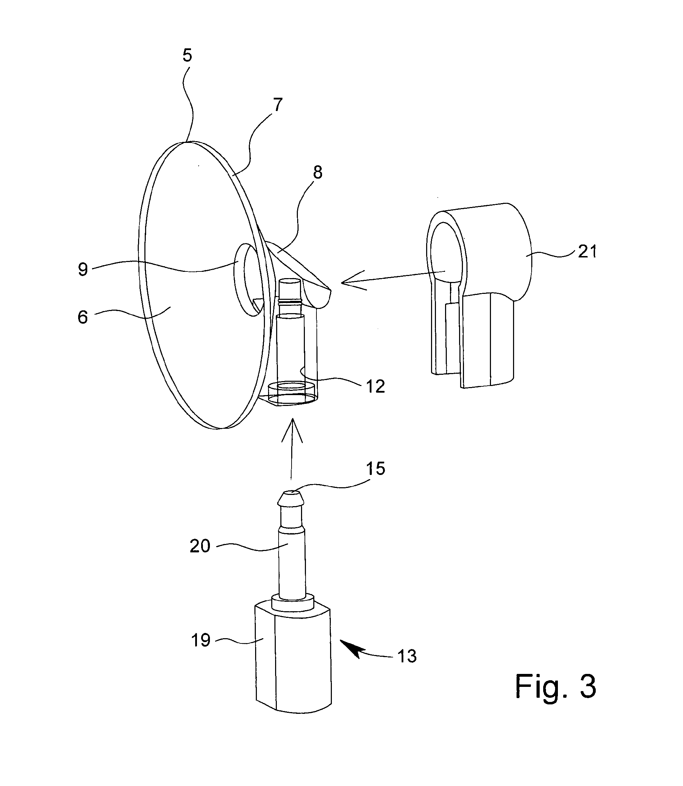

Fig. 2 zeigt ein dem Stand der Technik entsprechendes Beispiel eines Sensors 4. Ein erfindungsgemäßer Sensor 4, der nach dem gleichen Prinzip aufgebaut ist, ist Fig. 3 zu entnehmen.

Ein solcher Sensor hat zunächst einen Saugfuß 5, der vorzugsweise gummielastisch ausgebildet ist. Ein solcher Saugfuß 5 ist handelsüblich erhältlich, er ist regelmäßig aus einem entsprechend flexiblen Kunststoffmaterial ausgeführt. Der Saugfuß 5 dient zur mechanischen Befestigung des Sensors 4 am Fenster 2.

Der Saugfuß 5 hat eine Saugseite 6 und eine der Saugseite 6 gegenüberliegende Rückseite 7. In beiden Beispielen und nach bevorzugter Ausgestaltungsvariante ist vorgesehen, dass der Saugfuß 5 an der Rückseite 7 noch mindestens eine Ausformung 8 aufweist. Diese ist aus konstruktiven Gründen häufig erforderlich und wird später noch genauer erläutert.

An der Saugseite 6 des Saugfußes 5 ist auf jeden Fall eine Lichteinspeisungsstelle 9 vorgesehen, an der Licht von der Saugseite 6 her zur Rückseite 7 des Saugfußes 5 hin eingespeist wird.

Im in Fig. 2 dargestellten Beispiel des Standes der Technik, der eingangs bereits erläutert worden ist, ist an der Lichteinspeisungsstelle 9 eine Linse vorgesehen, die mit einem schräg angeschnittenen Ende eines Lichtleiterkabels 10 zusammenwirkt. Durch das Lichtleiterkabel 10 wird das einfallende Licht einer entfernt angeordneten Steuerelektronik 11 zugeführt. Bei dem dem Stand der Technik entsprechenden Beispiel in Fig. 2 weist der Saugfuß 5 an der Rückseite 7, und zwar dort an der Ausformung 8, eine Einsteckaufnahme 12 für das Ende des Lichtleiterkabels 10 auf. Die Einsteckaufnahme 12 endet an der Lichteinspeisungsstelle 9.

Bei dem in Fig. 3 dargestellten ersten Ausführungsbeispiel eines erfindungsgemäßen Sensors 4 ist vorgesehen, dass am Saugfuß 5, hier genauer gesagt an dessen Rückseite 7, ein Datenfernübertragungsmodul 13 lösbar angebracht ist. Dieses Datenfernübertragungsmodul 13 weist einen optoelektrischen oder optoelektronischen Wandler 14 mit einem optischen Eingang 15 und einem elektronischen Ausgang auf. Zur Verarbeitung des Ausgangssignals des Wandlers 14 ist eine Steuerelektronik 16 vorgesehen. Eine Übertragungseinrichtung 17 zur drahtlosen Übertragung des Ausgangssignals des Wandlers 14, alles geleitet durch die Steuerelektronik 16 bewirkt eine Übertragung des Ausgangssignals an eine räumlich entfernt befindliche Empfangseinrichtung. Vorgesehen ist schließlich ein elektrischer Energiespeicher 18, vorzugsweise in Form eines wiederaufladbaren Akkus, ggf. aber auch als nicht wiederaufladbare Batterie, insbesondere als Knopfzelle, durch den die Energie für den Betrieb des Datenfernübertragungsmoduls 13 bereitgestellt wird.

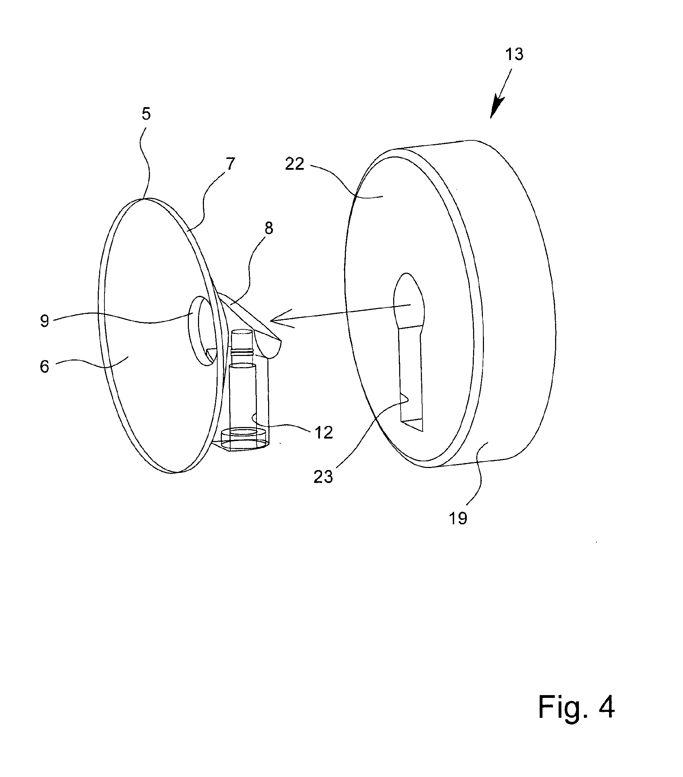

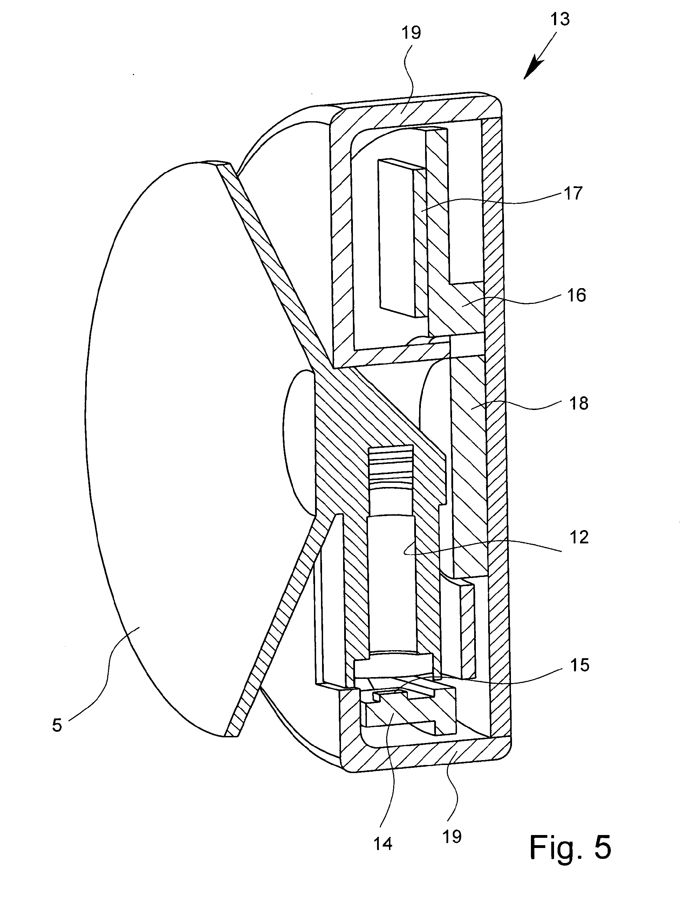

Die einzelnen Bauteile des Datenfernübertragungsmoduls 13 befinden sich in Fig. 3 innerhalb des dort dargestellten Gehäuses 19 und sind dort nicht zu erkennen. Bei dem in dem Ausführungsbeispiel von Fig. 4 und 5 dargestellten Datenfernübertragungsmodul 13 sind diese Bauteile innerhalb des Gehäuses 19 in Fig. 5 im Einzelnen identifiziert worden.

Wie Fig. 3 erkennen lässt, ist für die Lehre der Erfindung entscheidend, dass das Datenfernübertragungsmodul 13 so am Saugfuß 5 des Sensors 4 angeordnet ist, dass der Wandler 14 mit seinem optischen Eingang 15 an der Lichteinspeisungsstelle 9 oder im Lichteintrittsbereich der Lichteinspeisungsstelle 9 angeordnet ist.

Im in Fig. 3 dargestellten Ausführungsbeispiel befindet sich unten das Gehäuse 19 des Datenfernübertragungsmoduls 13. Dieses hat einen nach oben vorspringenden stiftförmigen Ansatz 20. Am Ende des Ansatzes 20 des Gehäuses 19 befindet sich der optische Eingang 15 des Wandlers 14. Alternativ kann sich hier auch die Eintrittsstelle eines kurzen Lichtleiters befinden, der sich im Ansatz 20 des Gehäuses 19 befindet. Dann befindet sich der Eingang 15 des Wandlers 14 etwa dort, wo der Ansatz 20 am Gehäuse 19 anschließt.

Bei der erstgenannten Variante ist der Wandler 14 mit seinem optischen Eingang 15 in der Einsteckaufnahme 12 des Saugfußes 5 angeordnet, wenn das Datenfernübertragungsmodul 13 in die Einsteckaufnahme 12 eingesteckt ist. Im zweiten Fall ist der optische Eingang 15 an der Einsteckaufnahme 12 angeordnet ist und befindet sich jedenfalls im Lichteintrittsbereich der Lichteinspeisungsstelle 9, wenn das Datenfernübertragungsmodul 13 in die Einsteckaufnahme 12 eingesteckt ist.

Im in Fig. 3 dargestellten Ausführungsbeispiel kann man sehen, dass die Lichteinspeisungsstelle 9 hier einen schräg stehenden Spiegel aufweist, der das durch die Öffnung an der Saugseite 6 des Saugfußes 5 eintretende Licht in die Einsteckaufnahme 12 umleitet. Um die Wirkung des Spiegels an der Lichteinspeisungsstelle 9 zu optimieren, befindet sich an der Rückseite 7 des Saugfußes 5 eine auf die dort befindliche Ausformung 8 aufgesteckte Schutzkappe 21.

Im in Fig. 3 dargestellten Ausführungsbeispiel wird das Datenfernübertragungsmodul 13 allein durch Einstecken des Ansatzes 20 in die Einsteckaufnahme 12 an der Rückseite 7 des Saugfußes 5 mechanisch mit dem Saugfuß 5 verbunden. Durch Herausziehen aus der Einsteckaufnahme 12 lässt sich das Datenfernübertragungsmodul 13 jederzeit wieder vom Saugfuß 5 trennen. Man kann den Saugfuß 5 also beliebig einsetzen, entweder mit einem Lichtleiterkabel 10 wie in Fig. 2 dargestellt oder mit dem eingesteckten Datenfernübertragungsmodul 13 wie in Fig. 3 dargestellt.

Fig. 4 zeigt eine weitere Ausführungsform eines erfindungsgemäßen Sensors 4. Bei dieser Konstruktion hat das Datenfernübertragungsmodul 13 ein im Wesentlichen scheibenförmiges Gehäuse 19 ohne einen Ansatz. Der Saugfuß 5 sieht auf der Rückseite 7 mit seiner dortigen Ausformung 8 genau so aus wie der Saugfuß 5 bei dem in Fig. 3 dargestellten Ausführungsbeispiel. Hier ist allerdings vorgesehen, dass das Datenfernübertragungsmodul 13 eine Vorderseite 22 aufweist, deren Kontur an die Rückseite 7 des Saugfußes 5 angepasst ist und dass das Datenfernübertragungsmodul 13 auf den Saugfuß 5 aufgesteckt ist. An der Vorderseite 22 des Gehäuses 19 des Datenfernübertragungsmoduls 13 befindet sich eine schlüssellochähnliche Ausnehmung 23, mit der das Gehäuse 19 auf die entsprechend geformte Ausformung 8 an der Rückseite 7 des Saugfußes 5 passgenau aufgesteckt werden kann. Durch dieses Aufstecken wird zum einen die Wirkung der Schutzkappe 21 des in Fig. 3 dargestellten Ausführungsbeispiels erreicht, wird zum anderen das Datenfernübertragungsmodul 13 am Saugfuß 5 fest haftend angebracht. Das Datenfernübertragungsmodul 13 kann auch wieder abgezogen werden, wenn man anderes mit dem Saugfuß 5 vorhat.

Fig. 5 zeigt zur Verdeutlichung des Aufbaus das Innere des in Fig. 4 dargestellten Ausführungsbeispiels mit den entsprechend eingezeichneten Baugruppen des Datenfernübertragungsmoduls 13. Man sieht insbesondere gut unten den optischen Eingang 15 des Wandlers 14. Hier ist vorgesehen, dass der optische Eingang 15 des Wandlers 14 bei aufgestecktem Datenfernübertragungsmodul 13 unmittelbar am offenen Ende der Einsteckaufnahme 12 sitzt.

Das Datenfernübertragungsmodul 13 ist auch für sich selbst ein handelsfähiges Bauteil, beispielsweise zur Kombination mit einem bereits vorhandenen Sensor 4 mit Saugfuß 5.

### Bezugszeichenliste:

- 1: Wand
- 2: Fenster
- 3: Verdunkelungsvorrichtung
- 4: Sensor
- 5: Saugfuß
- 6: Saugseite
- 7: Rückseite
- 8: Ausformung
- 9: Lichteinspeisungsstelle
- 10: Lichtleiterkabel
- 11: Steuerelektronik
- 12: Einsteckaufnahme
- 13: Datenfernübertragungsmodul
- 14: Wandler
- 15: Eingang
- 16: Steuerelektronik
- 17: Übertragungseinrichtung
- 18: Energiespeicher
- 19: Gehäuse
- 20: Ansatz
- 21: Schutzkappe
- 22: Vorderseite
- 23: Ausnehmung

## Patentansprüche

1. Sensor, insbesondere für ein Fenster (2) und insbesondere für eine dem Fenster (2) zugeordnete, motorisch arbeitende Verdunkelungsvorrichtung (3) wie einen Rollladen, eine Jalousie oder eine Markise,
mit einem vorzugsweise gummielastisch ausgebildeten Saugfuß (5) zur mechanischen Befestigung am Fenster (2), wobei der Saugfuß (5) eine Saugseite (6) und eine der Saugseite (6) gegenüberliegende Rückseite (7) aufweist,
wobei der Saugfuß (5) an der Rückseite (7) vorzugsweise mit mindestens einer Ausformung (8) versehen ist und
wobei an der Saugseite (6) des Saugfußes (5) eine Lichteinspeisungsstelle (9) vorgesehen ist, an der Licht zur Rückseite (7) des Saugfußes (5) hin einspeisbar ist, **dadurch gekennzeichnet,**
**dass** am Saugfuß (5), vorzugsweise an der Rückseite (7) des Saugfußes (5), ein Datenfernübertragungsmodul (13) lösbar angebracht ist, das einen optoelektrischen oder optoelektronischen Wandler (14) mit einem optischen Eingang (15) und einem elektronischen Ausgang, eine Steuerelektronik zur Verarbeitung des Ausgangssignals des Wandlers (14), eine Übertragungseinrichtung (17) zur drahtlosen Übertragung des Ausgangssignals des Wandlers (14) an eine räumlich entfernt befindliche Empfangseinrichtung und einen elektrischen Energiespeicher (18) aufweist und
**dass** das Datenfernübertragungsmodul (13) so am Saugfuß (5) angeordnet ist, dass der Wandler (14) mit seinem optischen Eingang (15) an der Lichteintrittsstelle (9) oder im Lichteintrittsbereich der Lichteintrittsstelle (9) angeordnet ist.

2. Sensor nach Anspruch 1, **dadurch gekennzeichnet,**
**dass** der Saugfuß (5) an der Rückseite (7), vorzugsweise in der dortigen Ausformung (8), eine Einsteckaufnahme (12) für ein Ende eines Lichtleiters (10) aufweist, wobei die Einsteckaufnahme (12) an der Lichteinspeisungsstelle (9) endet, und dass der Wandler (14) mit seinem optischen Eingang (15) in oder an der Einsteckaufnahme (12) angeordnet ist.

3. Sensor nach Anspruch 2, **dadurch gekennzeichnet,**
**dass** an der Lichteinspeisungsstelle (9) ein vorzugsweise schräg stehender Spiegel und/oder eine Linse vorgesehen ist.

4. Sensor nach Anspruch 2 oder 3, **dadurch gekennzeichnet,**
**dass** das Datenfernübertragungsmodul (13) mechanisch in die Einsteckaufnahme (12) eingesteckt und zumindest auch dadurch mechanisch am Saugfuß (5) befestigt ist.

5. Sensor nach einem der Ansprüche 1 bis 4, **dadurch gekennzeichnet,**
**dass** das Datenfernübertragungsmodul (13) eine Vorderseite (22) aufweist, deren Kontur an die Rückseite (7) des Saugfußes (5) angepasst ist und
**dass** das Datenfernübertragungsmodul (13) auf den Saugfuß (5) aufgesteckt ist.

6. Sensor nach Anspruch 5, **dadurch gekennzeichnet,**
**dass** der optische Eingang (15) des Wandlers (14) bei aufgestecktem Datenfernübertragungsmodul (13) unmittelbar am offenen Ende der Einsteckaufnahme (12) sitzt.

7. Datenfernübertragungsmodul für einen Sensor nach einem der Ansprüche 1 bis 6,
wobei das Datenfernübertragungsmodul (13) ein Gehäuse (19) und in dem Gehäuse (19) einen optoelektrischen oder optoelektronischen Wandler (14) mit einem optischen Eingang (15) und einem elektronischen Ausgang, eine Steuerelektronik (16) zur Verarbeitung des Ausgangssignals des Wandlers (14), eine Übertragungseinrichtung (17) zur drahtlosen Übertragung des Ausgangssignals des Wandlers (14) an eine räumlich entfernt befindliche Empfangseinrichtung und einen elektrischen Energiespeicher (18) aufweist,
**dadurch gekennzeichnet,**
**dass** das Gehäuse (19) des Datenfernübertragungsmoduls (13) einen Ansatz (20) aufweist, der in eine Einsteckaufnahme (12) eines Saugfußes (5) eines Sensors (4) einsteckbar ist und an dem oder in dem sich der Eingang (15) des Wandlers (14) befindet.

8. Datenfernübertragungsmodul für einen Sensor nach einem der Ansprüche 1 bis 6,
wobei das Datenfernübertragungsmodul (13) ein Gehäuse (19) und in dem Gehäuse (19) einen optoelektrischen oder optoelektronischen Wandler (14) mit einem optischen Eingang (15) und einem elektronischen Ausgang, eine Steuerelektronik (16) zur Verarbeitung des Ausgangssignals des Wandlers (14), eine Übertragungseinrichtung (17) zur drahtlosen Übertragung des Ausgangssignals des Wandlers (14) an eine räumlich entfernt befindliche Empfangseinrichtung und einen elektrischen Energiespeicher (18) aufweist,
**dadurch gekennzeichnet,**
**dass** das Gehäuse (19) des Datenfernübertragungsmoduls (13) eine Vorderseite (22) aufweist, deren Kontur an die Rückseite (7) des Saugfußes (5) eines Sensors (4) nach einem der Ansprüche 1 bis 6 angepasst ist und
**dass** das Datenfernübertragungsmodul (13) mit der Vorderseite (22) auf die Rückseite (7) des Saugfußes (5) aufsteckbar ist.

9. Datenfernübertragungsmodul nach Anspruch 8, **dadurch gekennzeichnet,**
**dass** das Datenfernübertragungsmodul (13) an der Vorderseite (22) des Gehäuses (19) eine Ausnehmung (23) aufweist, mit der das Datenfernübertragungsmodul (13) auf eine Ausformung (8) an der Rückseite (7) des Saugfußes (5) des Sensors (4) aufsteckbar ist.
